# FASCICULE DE BREVET EUROPEEN

(11) **EP 2 257 701 B1**
(45) Date de publication et mention de la délivrance du brevet: **13.07.2011**
(21) Numéro de dépôt: 09720800.3
(22) Date de dépôt: 27.02.2009
(51) Int. Cl.: F02C 9/28, F28F 27/02

(54) **INSTALLATION D'ECHANGEUR THERMIQUE**
WÄRMETAUSCHERSYSTEM
HEAT EXCHANGER SYSTEM

(30) Priorité: 29.02.2008 FR 0851315
(43) Date de publication de la demande: 08.12.2010
(73) Titulaire: Snecma, 75015 Paris (FR)
(72) Inventeur: Brun, Gilles, F-75001 Paris (FR)
(74) Mandataire: Besnard, Christophe Laurent
(86) Numéro de dépôt international: PCT/FR2009/050322
(87) Numéro de publication internationale: WO 2009/112779

(56) Documents cités:
- EP-A- 1 061 243
- EP-A1- 2 233 875
- US-A1- 2004 011 052
- US-A1- 2006 053 803

## Description

L'invention concerne une installation d'échangeur thermique destinée à être traversée par un liquide. Une telle installation peut être montée dans tout circuit de liquide (i.e. hydraulique) et, notamment, un circuit de carburant ou un circuit d'huile.

Cette installation peut être utilisée, par exemple, dans un circuit de carburant d'une turbomachine terrestre ou aéronautique (turboréacteur ou turbopropulseur) et, plus particulièrement, dans un circuit de carburant de turboréacteur d'avion.

L'invention concerne une installation d'échangeur thermique correspondant au préambule de la revendication 1. Une telle installation est connu du document EP 1 061 243 A. En fonctionnement, cet échangeur thermique est traversé, d'une part, par du carburant en provenance du réservoir de l'avion, ce carburant passant par lesdites entrée et sortie de liquide et, d'autre part, par l'huile du circuit de lubrification du générateur d'électricité de l'avion (ou I.D.G. pour Integrated Drive Generator), cette huile passant d'autres entrée et sortie de liquide de l'échangeur.

Ledit carburant ayant une température inférieure à celle de l'huile (qui s'échauffe au contact de l'I.D.G.), l'échangeur thermique permet de refroidir l'huile.

Ci-après, on s'intéresse tout particulièrement au circuit de carburant traversant l'échangeur.

Le colmatage de l'échangeur, dû aux impuretés (également appelées contaminants) présentes dans le carburant est une panne dormante pouvant survenir à tout moment après un certain temps de fonctionnement du turboréacteur. Un colmatage partiel de l'échangeur provoquerait des pertes de charge qui pourraient perturber le bon fonctionnement des éléments du circuit situés en aval de l'échangeur, et un colmatage total de l'échangeur couperait le circuit de carburant et provoquerait donc l'arrêt du turboréacteur.

Parmi les différents types d'échangeur thermique connus et pouvant être utilisés dans un circuit de carburant de turboréacteur, on distingue les échangeurs à tubes et les échangeurs à plaques.

Les échangeurs à tubes ont une matrice constituée par un réseau de tubes qui séparent les deux liquides traversant l'échangeur. La section de passage des tubes doit répondre à des contraintes de faisabilité. En d'autres termes, en deçà d'un diamètre intérieur minimum des tubes, ces tubes sont trop difficiles à fabriquer. Ce diamètre intérieur minimum est souvent nettement supérieur au diamètre des impuretés présentes dans le carburant, de sorte que le risque de colmatage de ce type d'échangeur reste faible, sans être nul cependant. Cependant, afin d'augmenter les performances thermiques d'un échangeur à tubes, les tubes présentent généralement sur leur face interne des picots. Or, ces picots accrochent les impuretés et les impuretés prisonnières des picots bougent et usent progressivement le tube jusqu'à sa perforation. Une telle perforation peut avoir des conséquences dramatiques.

Les échangeurs à plaques ont l'avantage de pouvoir présenter des sections de passage de liquide inférieures à celles des échangeurs à tubes, mais plus les sections de passage sont faibles et plus le risque de colmatage augmente. Aussi, les échangeurs à plaques ne sont pas, ou peu, utilisés aujourd'hui dans les circuits de carburant de turboréacteur.

Quel que soit le type d'échangeur employé, on préfère ne pas avoir à surveiller le colmatage de l'échangeur. Cette absence de surveillance, oblige à se prémunir impérativement du colmatage de l'échangeur. Ainsi, les sections de passage de liquide dans l'échangeur sont prévues supérieures à la taille de la plus grosse des impuretés susceptibles d'être contenues dans le liquide. C'est pourquoi ces sections de passage sont généralement importantes.

L'invention a pour but de proposer une installation d'échangeur thermique qui permette d'utiliser, si on le souhaite, un échangeur thermique avec de faibles sections de passage de liquide, tout en se dispensant de surveiller le colmatage de cet échangeur.

Pour atteindre ce but, l'invention a pour objet une installation d'échangeur thermique destinée à être traversée par un liquide, comprenant un échangeur thermique avec une entrée et une sortie de liquide, caractérisée en ce qu'elle comprend un clapet de dérivation avec une entrée et une sortie de liquide, et un filtre autonettoyant avec une entrée de liquide et deux sorties de liquide, dont une sortie de liquide filtré et une sortie de liquide non filtré, ladite sortie de liquide filtré étant raccordée à l'entrée de l'échangeur et ladite sortie de liquide non filtré étant raccordée à l'entrée du clapet ; et en ce que la sortie de liquide de l'échangeur est raccordée en aval de la sortie du clapet.

L'installation de l'invention comprend donc un filtre auto-nettoyant raccordé à l'entrée de l'échangeur. Au début, ce filtre est traversé par la totalité du liquide arrivant dans l'installation. L'entrée de l'échangeur est donc l'entrée de liquide de l'installation. Le filtre capte l'ensemble des impuretés de taille supérieure à la maille du filtre. Cette accumulation d'impuretés, entraîne un encrassement du filtre et donc une augmentation de la perte de charge du filtre. Lorsque la pression à l'entrée du clapet de dérivation, qui augmente, atteint un seuil prédéfini, ce clapet s'ouvre. Cette ouverture maintient la perte de charge à un niveau acceptable et permet l'écoulement total du fluide, via le clapet. Cet écoulement va entraîner les impuretés prisonnières dans le filtre autonettoyant, et donc nettoyer le filtre. En parallèle, la surface filtrante dégagée des impuretés va laisser passer le liquide et donc diminuer la perte de charge. Le clapet va progressivement se fermer et le filtre va reprendre son fonctionnement normal.

Quelle que soit la position (ouverte ou fermée) du clapet de dérivation, l'échangeur est toujours protégé des impuretés par le filtre. Il n'y a plus donc plus de risque de colmatage de l'échangeur de sorte qu'on peut se dispenser de surveiller le colmatage de celui-ci. En outre, dans le cas d'un échangeur thermique à tubes avec des picots, on supprime également le risque de perforation du tube évoqué plus haut.

De plus, au lieu d'un échangeur à tubes, on peut utiliser un échangeur thermique à plaque avec de faibles sections de passage, un échangeur à plaque étant généralement moins encombrants, moins lourds et plus performants en terme d'échange thermique qu'un échangeur à tubes.

Enfin, le filtre étant autonettoyant et l'échangeur étant protégé des impuretés, ces éléments n'ont pas besoin d'être nettoyés (ou remplacé) fréquemment, voire n'ont jamais besoin d'être nettoyés, ce qui diminue les coûts de maintenance de l'installation.

L'invention a également pour objet un circuit de carburant de turbomachine comprenant l'installation d'échangeur thermique précitée.

L'invention se destine à tout type de turbomachine, terrestre ou aéronautique, et plus particulièrement aux turboréacteurs d'avion.

L'invention et ses avantages seront mieux compris à la lecture de la description détaillée qui suit. Cette description fait référence aux figures annexées sur lesquelles :
- la figure 1 représente un exemple de circuit de carburant selon l'invention ;
- la figure 2 représente le filtre auto-nettoyant et le clapet de dérivation d'un exemple d'installation selon l'invention, ledit clapet étant en position fermée ;
- la figure 3 est une vue analogue à celle de la figure 2, ledit clapet étant en position ouverte.

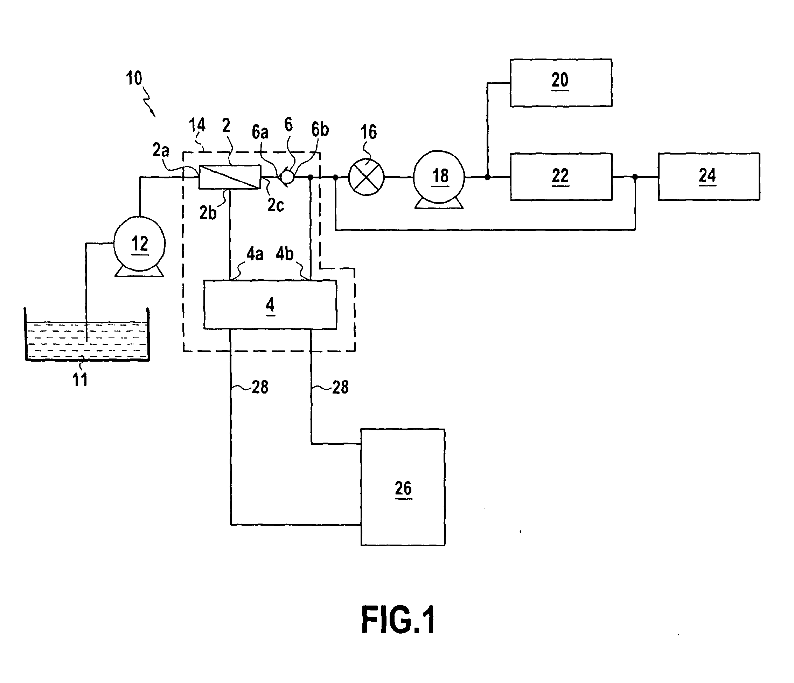

La figure 1 représente schématiquement un exemple de circuit de carburant 10 de turboréacteur d'avion.

L'amont et l'aval sont définis dans la présente demande par rapport au sens d'écoulement normal du liquide (ici le carburant) traversant le circuit et l'installation de l'invention.

Le circuit 10 comprend, de l'amont vers l'aval : un réservoir 11 de carburant (il s'agit du réservoir de carburant de l'avion); une pompe basse pression 12 pompant le carburant dans ledit réservoir 11; une installation d'échangeur thermique 14 selon l'invention, alimentée par la pompe 12; un filtre principal 16; une pompe haute pression 18; un mécanisme de servocommande 20, alimenté en carburant par la pompe 18; un régulateur de carburant 22 alimenté par la pompe 18, et des injecteurs de carburant 24 situés en aval du régulateur 22. Ces injecteurs 24 sont situés dans la chambre de combustion du turboréacteur.

La figure 1 représente en outre le circuit d'huile 28 permettant d'assurer la lubrification du générateur d'électricité, ou I.D.G. 26 de l'avion. L'installation d'échangeur thermique 14 selon l'invention, comprend : un filtre autonettoyant 2; un échangeur thermique 4; et un clapet de dérivation 6.

L'échangeur thermique 4 est traversé, d'une part, par le carburant du circuit de carburant 10 et, d'autre part, par l'huile du circuit 28. Le carburant étant à une température inférieure à l'huile, lors du fonctionnement du turboréacteur, l'échangeur thermique 4 permet de refroidir cette huile.

Comme on peut le constater, l'installation d'échangeur thermique 14 est située en amont du filtre principal 16 du circuit 10 et, en aval de la pompe à carburant basse pression 12 du circuit 10. Le filtre autonettoyant 2 présente une entrée de liquide 2a et deux sorties de liquide, dont une sortie de liquide filtré 2b et une sortie de liquide non filtré 2c.

L'entrée 2a est l'entrée de liquide de l'installation 14 et tout le liquide traversant l'installation passe par cette entrée 2a. Dans l'exemple, cette entrée est raccordée à la sortie de la pompe 12.

La sortie de liquide filtré 2b est raccordée à l'entrée 4a de l'échangeur 4, tandis que la sortie de liquide non filtré 2c est raccordée à l'entrée 6a du clapet 6. Par ailleurs, la sortie de liquide 4b de l'échangeur est en aval de la sortie 6b du clapet, de sorte que le liquide sortant de l'installation 14 comprend le liquide sortant par la sortie 6b du clapet et/ou le liquide sortant par la sortie 4b de l'installation.

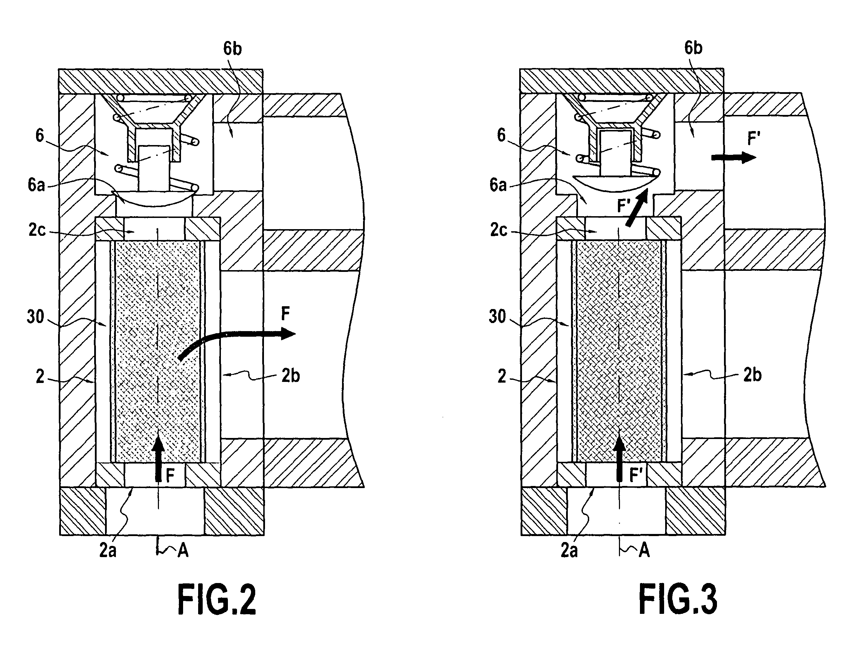

Les figures 2 et 3 représentent plus en détail un exemple de filtre auto-nettoyant 2 et de clapet de dérivation 6. Dans cet exemple, le filtre 2 comprend une membrane filtrante tubulaire 30 d'axe T. Par exemple, la membrane 30 est en tissu du type à tissage hollandais uni, en anglais "plain dutch weave", ou en tissu de type "Reps Uni".

L'entrée de liquide 2a du filtre 2 est située à une extrémité de ladite membrane 30. La sortie de liquide non filtré 2c du filtre 2 est située à l'autre extrémité de la membrane 30, la sortie de liquide filtré 2b est située sur le côté de la membrane 30. Le flux de liquide passant par l'entrée 2a et prélevé par ladite sortie de liquide filtré 2b, représenté par les flèches F sur la figure 2, traverse la membrane 30 (suivant une direction transversale à l'axe T) et est donc filtré par celle-ci. Le flux de liquide passant par l'entrée 2a et prélevé par ladite sortie de liquide non filtré 2c, représenté par les flèches F' sur la figure 3, passe à l'intérieur de ladite membrane 30 suivant l'axe T.

Lorsque les impuretés commencent à encrasser la membrane 30, la pression du liquide au niveau de la sortie de liquide non filtré 2c augmente, jusqu'à une certaine valeur à partir de laquelle le clapet de dérivation 6 s'ouvre pour laisser passer le liquide. Il s'établit ainsi un flux de liquide (flèches F') orienté suivant l'axe T à l'intérieur de la membrane 30. Ce flux de liquide entraîne avec lui les impuretés présentes sur la face intérieure de cette membrane 30 et qui encrassait celle-ci. L'élément filtrant 30 est ainsi nettoyé de ses impuretés. La pression au niveau de la sortie de liquide non filtré 2c diminue alors, et le clapet de dérivation 6 se referme progressivement, jusqu'à atteindre sa position fermée d'origine, représentée sur la figure 2.

Lorsque le clapet est dans sa position fermée (voir figure 2), l'ensemble du liquide passant par l'entrée 2a est dirigé vers l'échangeur thermique 4, via la sortie de liquide filtré 2b.

Dans un circuit de carburant de turboréacteur d'avion, la maille du filtre principal 16 est généralement comprise entre 32 et 36 microns (µm).

La maille du filtre auto-nettoyant 2 est, avantageusement, entre 55 et 75 µm. Cette taille de maille permet de filtrer des particules de taille supérieure constituant un danger pour l'échangeur thermique 4, aussi bien en terme d'usure qu'en terme de colmatage. En d'autres termes, les particules que le filtre 2 laisse passer ne présentent pas de risque pour l'échangeur thermique 4. On notera que le filtre auto-nettoyant 2 étant situé en amont du filtre principal 16, il est logique que la taille de sa maille soit supérieure à celle du filtre principal.

## Revendications

1. Installation d'échangeur thermique (14) destinée à être traversée par un liquide, comprenant un échangeur thermique (4) avec une entrée (4a) et une sortie (4b) de liquide, un clapet de dérivation (6) avec une entrée (6a) et une sortie (6b) de liquide, et un filtre autonettoyant (2) avec une entrée (2a) de liquide et une sortie (2b) de liquide filtré, **caractérisée en ce que** le filtre comporte, par ailleurs, une sortie de liquide non filtré (2c), ladite sortie de liquide filtré (2b) étant raccordée à l'entrée de l'échangeur (4a) et ladite sortie de liquide non filtré (2c) étant raccordée à l'entrée du clapet (6a); et **en ce que** la sortie (4b) de l'échangeur est raccordée en aval de la sortie (6b) du clapet.

2. Installation d'échangeur thermique selon la revendication 1, dans laquelle ledit filtre (2) comprend une membrane filtrante (30) tubulaire d'axe A, le liquide prélevé par ladite sortie de liquide filtré (2b) traversant ladite membrane (30), et le liquide prélevé par ladite sortie de liquide non filtré (2c) passant à l'intérieur de ladite membrane (30) suivant l'axe A.

3. Installation d'échangeur thermique selon la revendication 2, dans laquelle l'entrée (2a) dudit filtre autonettoyant (2) est située à une extrémité de ladite membrane filtrante (30), ladite sortie de liquide non filtré (2b) est située à l'autre extrémité de cette membrane (30), et ladite sortie de liquide filtré (2c) est située sur le côté de cette membrane (30).

4. Installation d'échangeur thermique selon l'une quelconque des revendications 1 à 3, dans laquelle ledit échangeur thermique (4) est un échangeur à plaque.

5. Circuit de carburant de turbomachine comprenant une installation d'échangeur thermique (14) selon l'une quelconque des revendications 1 à 4.

6. Circuit de carburant selon la revendication 5, dans lequel ladite installation d'échangeur thermique (14) est située en amont du filtre principal (16) du circuit.

7. Circuit de carburant selon la revendication 5 ou 6, dans lequel ladite installation d'échangeur thermique (14) est située en aval de la pompe à carburant basse pression (12) du circuit.

8. Circuit de carburant selon l'une quelconque des revendications 5 à 7, dans lequel la maille dudit filtre autonettoyant (2) est comprise entre 55 et 75 microns.

9. Turbomachine comprenant un circuit de carburant (10) selon l'une quelconque des revendications 5 à 8.

## Claims

1. A heat exchanger system (14) through which a liquid is intended to flow, comprising a heat exchanger (4) with a liquid inlet (4a) and a liquid outlet (4b), a bypass valve (6) with a liquid inlet (6a) and a liquid outlet (6b), and a self-cleaning filter (2) with a liquid inlet (2a) and one liquid outlet for filtered liquid (2b), **characterized in that** the filter further comprises one outlet for non-filtered liquid (2c), said outlet for filtered liquid (2b) being connected to the inlet of the exchanger (4a) and said outlet for non-filtered liquid (2c) being connected to the inlet of the valve (6a); and **in that** the outlet (4b) of the exchanger is connected downstream of the outlet (6b) of the valve.

2. The heat exchanger system according to claim 1, wherein said filter (2) comprises a filtering membrane (30) having a tubular shape around an axis A, the liquid withdrawn through said outlet for filtered liquid (2b) passing through said membrane (30), and the liquid withdrawn through said outlet for non-filtered liquid (2c) passing inside said membrane (30) along the axis A.

3. The heat exchanger system according to claim 2, wherein the inlet (2a) of said self-cleaning filter (2) is situated at one end of said filtering membrane (30), said outlet for non-filtered liquid (2b) is situated at the other end of this membrane (30), and said outlet for filtered liquid (2c) is situated on the side of said membrane (30).

4. The heat exchanger system according to any one of claims 1 to 3, wherein said heat exchanger (4) is a plate exchanger.

5. A fuel circuit of a turbomachine, the fuel circuit comprising a heat exchanger system (14) according to any one of claims 1 to 4.

6. The fuel circuit according to claim 5, wherein said heat exchanger system (14) is situated upstream of the main filter (16) of the circuit.

7. The fuel circuit according to claim 5 or 6, wherein said heat exchanger system (14) is situated downstream of the low-pressure fuel pump (12) of the circuit.

8. The fuel circuit according to any one of claims 5 to 7, wherein the mesh of the self-cleaning filter (2) is between 55 and 75 microns.

9. A turbomachine comprising a fuel circuit (10) according to any one of claims 5 to 8.

## Patentansprüche

1. Wärmetauschereinrichtung (14), die dazu bestimmt ist, von einer Flüssigkeit durchströmt zu werden, umfassend einen Wärmetauscher (4) mit einem Einlaß (4a) und einem Auslaß (4b) für Flüssigkeit, ein Bypass-Ventil (6) mit einem Einlaß (6a) und einem Auslaß (6b) für Flüssigkeit sowie einen selbstreinigenden Filter (2) mit einem Flüssigkeitseinlaß (2a) und einem Auslaß (2b) für gefilterte Flüssigkeit, **dadurch gekennzeichnet, daß** der Filter weiterhin einen Auslaß für ungefilterte Flüssigkeit (2c) umfaßt, wobei der Auslaß für gefilterte Flüssigkeit (2b) mit dem Einlaß des Tauschers (4a) verbunden ist und der Auslaß für ungefilterte Flüssigkeit (2c) mit dem Einlaß des Ventils (6a) verbunden ist, und daß der Auslaß (4b) des Tauschers nach dem Auslaß (6b) des Ventils angeschlossen ist.

2. Wärmetauschereinrichtung nach Anspruch 1, wobei der Filter (2) eine röhrenförmige Filtermembran (30) mit der Achse A umfaßt, wobei die über den Auslaß für gefilterte Flüssigkeit (2b) entnommene Flüssigkeit die Membran (30) durchquert und wobei die über den Auslaß für ungefilterte Flüssigkeit (2c) entnommene Flüssigkeit innerhalb der Membran (30) entlang der Achse A strömt.

3. Wärmetauschereinrichtung nach Anspruch 2, wobei der Einlaß (2a) des selbstreinigenden Filters (2) an einem Ende der Filtermembran (30) gelegen ist, wobei der Auslaß für ungefilterte Flüssigkeit (2c) am anderen Ende dieser Membran (30) gelegen ist und wobei der Auslaß für gefilterte Flüssigkeit (2b) an der Seite dieser Membran (30) gelegen ist.

4. Wärmetauschereinrichtung nach einem der Ansprüche 1 bis 3, wobei der Wärmetauscher (4) ein Plattentauscher ist.

5. Treibstoffkreis einer Turbomaschine, umfassend eine Wärmetauschereinrichtung (14) nach einem der Ansprüche 1 bis 4.

6. Treibstoffkreis nach Anspruch 5, wobei die Wärmetauschereinrichtung (14) dem Hauptfilter (16) des Kreises vorgeschaltet ist.

7. Treibstoffkreis nach Anspruch 5 oder 6, wobei die Wärmetauschereinrichtung (14) der Niederdruck-Treibstoffpumpe (12) des Kreises nachgeschaltet ist.

8. Treibstoffkreis nach einem der Ansprüche 5 bis 7, wobei die Maschenweite des selbstreinigenden Filters (2) zwischen 55 und 75 Mikron liegt.

9. Turbomaschine, die einen Treibstoffkreis (10) nach einem der Ansprüche 5 bis 8 umfaßt.
